# FASCICULE DE BREVET EUROPEEN

(11) **EP 3 027 440 B1**
(45) Date de publication et mention de la délivrance du brevet: **31.10.2018**
(21) Numéro de dépôt: 14742554.0
(22) Date de dépôt: 25.07.2014
(51) Int. Cl.: B60G 15/06

(54) **PALIER DE BUTEE POUR UNE SUSPENSION D'UN VEHICULE**
AXIALWÄLZLAGER FÜR EINE FAHRZEUGAUFHÄNGUNG
AXIAL ROLLING BEARING FOR A VEHICLE SUSPENSION

(30) Priorité: 30.07.2013 FR 1357512
(43) Date de publication de la demande: 08.06.2016
(73) Titulaire: NTN-SNR Roulements, 74010 Annecy (FR)
(72) Inventeur: DELARCHE, Sébastien, F-74320 Sevrier (FR)
(74) Mandataire: Alatis
(86) Numéro de dépôt international: PCT/EP2014/066097
(87) Numéro de publication internationale: WO 2015/014760

(56) Documents cités:
- EP-A1- 0 850 790
- EP-A1- 1 172 238
- EP-A2- 0 450 576
- WO-A2-2007/085323
- DE-A1- 3 829 376
- DE-A1- 4 137 447
- DE-A1- 19 752 269
- DE-A1- 19 809 074
- DE-A1-102008 049 976
- FR-A1- 2 910 944
- FR-A1- 2 966 084
- FR-A1- 2 966 086
- GB-A- 2 347 905

## Description

### DOMAINE TECHNIQUE DE L'INVENTION

L'invention se rapporte à une butée de suspension pour une jambe de force comportant un amortisseur télescopique et un ressort à boudin. L'invention se rapporte également à une jambe de suspension comportant une telle butée.

### ÉTAT DE LA TECHNIQUE ANTÉRIEURE

On connaît des jambes de suspension comportant un ressort à boudin, un amortisseur télescopique situé à l'intérieur du ressort à boudin, un tampon de choc servant de butée de fin de course d'amortissement de l'amortisseur télescopique et une butée de suspension tournante, comportant un palier à roulement dont le diamètre est sensiblement égal à celui du ressort à boudin. Il est alors possible, comme illustré par exemple dans le document GB 2 347 905, de prévoir une coupelle monobloc, en métal embouti ou en matière plastique, constituant une interface entre d'un côté le palier à roulement, et de l'autre le ressort à boudin et le tampon de choc. Le palier à roulement est confiné dans un logement constitué entre cette coupelle monobloc et un couvercle, qui présente une jupe extérieure venant en regard et à faible distance d'une face cylindrique de la coupelle pour protéger le palier. La jupe présente à son extrémité libre des crochets venant s'encliqueter sous la coupelle monobloc, ce qui permet d'assurer la cohésion entre couvercle, palier et coupelle avant l'assemblage sur le véhicule. Mais la pièce en matière plastique constitutive du couvercle est alors chère à fabriquer, notamment du fait de la présence des crochets qui rendent un moulage axial difficile, voire impossible. Dans le document DE19752269 est décrite une butée de suspension tournante comportant un palier à roulement logé entre un couvercle et une coupelle en matière plastique.

Dans le document WO 2007/085323 est décrite une butée de suspension tournante comportant un palier à roulement logé entre un couvercle en matière plastique et une coupelle également en matière plastique. Le couvercle est pourvu d'une jupe intérieure qui s'étend axialement vers la coupelle, radialement à l'intérieur du palier à roulement, et qui vient en recouvrement avec la coupelle. Cette jupe est pourvue d'un rebord d'accrochage, en saillie radiale vers l'extérieur. Le rebord d'accrochage vient s'encliqueter dans un rebord correspondant de la coupelle, qui fait saillie radialement vers l'intérieur, de manière à donner à l'ensemble constitué par la coupelle, le palier à roulement et le couvercle, une cohérence avant montage sur le véhicule. Mais cette solution, plus encore que la précédente, nécessite des moules complexes, avec des pièces de moule dont le mouvement n'est pas purement axial. Les cadences de production sont alors faibles, et le prix de revient est élevé.

On connaît par ailleurs des butées de suspension tournantes dont le couvercle et la coupelle peuvent être fabriqués dans des moules à mouvement axial. Tel est le cas par exemple de la butée illustrée dans le JP2006322505. Mais la butée est dépourvue de moyens assurant une cohérence avant montage sur le véhicule.

### EXPOSÉ DE L'INVENTION

L'invention vise à remédier aux inconvénients de l'état de la technique et à proposer une butée de suspension tournante facile à fabriquer, et formant un sous-ensemble cohérent avant montage sur le véhicule.

Pour ce faire est proposée, suivant un premier aspect de l'invention, une butée de suspension pour une jambe de suspension comportant un amortisseur télescopique et un ressort à boudin la butée de suspension définissant un axe géométrique de référence et comportant:
- un palier comportant au moins une rondelle supérieure et une rondelle inférieure tournant l'une par rapport à l'autre;
- un couvercle monobloc en matière plastique moulée, présentant une face inférieure comportant une zone de contact avec la rondelle supérieure, le couvercle présentant au moins une zone d'encliquetage;
- une coupelle monobloc inférieure en matière moulée présentant une face supérieure comportant une zone de contact avec la rondelle inférieure et une face inférieure comportant une zone annulaire périphérique d'appui pour l'extrémité supérieure du ressort à boudin, la coupelle comportant des crochets faisant saillie radialement vers la zone d'encliquetage du couvercle, de sorte à venir s'encliqueter sur la zone d'encliquetage du couvercle, la coupelle présentant des lumières en alignement axial avec les crochets de manière à ce que la coupelle ne comporte aucune partie en recouvrement radial avec les crochets.

La coupelle monobloc, réalisée en matière moulable, notamment en matière plastique ou en un matériau composite avec ou sans insert métallique, constitue à elle seule l'interface entre la rondelle inférieure du roulement et le ressort à boudin. La rondelle supérieure est de préférence en métal, et peut être réalisée par exemple par emboutissage. La rondelle inférieure est de préférence également métallique.

Les lumières, qui n'ont pas de fonction dans la butée en fonctionnement, sont la trace du mode de fabrication de la coupelle monobloc par moulage dans un moule dont les pièces sont mobiles les unes par rapport aux autres en translation parallèlement à l'axe de référence. En d'autres termes, les formes sont choisies de façon à éviter un moule à tiroirs latéraux, afin d'augmenter les cadences de fabrication et de limiter la complexité et les coûts.

La zone d'encliquetage peut être constituée de crochets individuels ou d'une partie saillante annulaire, cette dernière solution étant préférable dans la mesure où les crochets de la coupelle sont individualisés et espacés les uns des autres. De préférence, le couvercle est conformé de manière à ne comporter aucune partie en recouvrement radial avec la zone d'encliquetage. Le couvercle peut ainsi également être obtenu par moulage dans un moule dont les pièces sont mobiles les unes par rapport aux autres en translation par rapport à l'axe de référence.

Suivant un mode de réalisation, le couvercle comporte au moins une jupe cylindrique extérieure de protection, située radialement à l'extérieur du palier, et la coupelle comporte au moins une paroi cylindrique extérieure de protection, située radialement entre le palier et la jupe cylindrique extérieure de protection du couvercle, en regard et à distance de la jupe cylindrique extérieure de protection du couvercle, pour créer une perte de charge. Avantageusement, le couvercle peut comporter une jupe cylindrique extérieure de confinement, située axialement en regard et à distance de la paroi cylindrique extérieure de protection de la coupelle pour former une autre perte de charge radialement à l'extérieur du palier.

Préférentiellement, la coupelle et le couvercle délimitent un logement annulaire situé radialement entre le palier et la jupe cylindrique extérieure du couvercle, la butée comportant en outre un joint extérieur logé au moins partiellement dans le logement annulaire. On peut notamment prévoir que la coupelle comporte au moins une deuxième paroi cylindrique extérieure, située radialement à l'intérieur de la première paroi cylindrique extérieure de protection et délimitant le logement radialement vers l'intérieur.

Le joint extérieur peut être cylindrique, ou avoir une section en L, en T couché ou en H. On peut notamment prévoir que le joint extérieur comporte une partie annulaire s'étendant radialement entre la jupe cylindrique extérieure de confinement du couvercle et la paroi cylindrique extérieure de protection de la coupelle.

Suivant un mode de réalisation, le couvercle comporte au moins une jupe cylindrique intérieure de protection, située radialement à l'intérieur du palier, et la coupelle comporte au moins une paroi cylindrique intérieure de protection, située radialement à l'intérieur de la jupe cylindrique intérieure de protection du couvercle, en regard et à distance de la jupe cylindrique intérieure de protection du couvercle, pour créer une perte de charge. En particulier, les crochets peuvent être réalisés à l'extrémité de la paroi cylindrique intérieure de protection et faire saillie radialement vers l'extérieur, la jupe cylindrique intérieure de protection du couvercle étant pourvue d'une zone d'encliquetage faisant saillie radialement vers l'intérieur pour assurer l'accrochage élastique avec les crochets.

Le cas échéant, on peut prévoir que la coupelle comporte au moins une paroi cylindrique intérieure de confinement, située axialement en regard et à distance de la jupe cylindrique intérieure de protection du couvercle, de façon à créer une perte de charge supplémentaire.

Préférentiellement, la coupelle et le couvercle délimitent un logement annulaire intérieur entre la paroi cylindrique intérieure de protection de la coupelle et le palier, un joint intérieur étant logé dans le logement annulaire intérieur. Le joint intérieur peut être cylindrique, ou avoir une section en L, en T couché. On peut notamment prévoir que le joint intérieur comporte une partie annulaire s'étendant radialement entre la zone d'encliquetage et la coupelle.

De préférence, la face supérieure de la coupelle monobloc comporte des nervures de renfort situées radialement à l'extérieur de la zone de contact. Ces nervures sont destinées à assurer une rigidité en flexion à la coupelle, tout en limitant sa masse. De préférence, certaines au moins des nervures sont radiales. Les nervures permettent de transférer radialement les efforts entre rondelle inférieure et ressort à boudin, tout en limitant le niveau de contraintes dans la coupelle. Suivant un mode de réalisation, certaines au moins des nervures délimitent des alvéoles polygonales. On gère ainsi plusieurs modes de déformation.

La zone de contact peut également comporter des nervures sur lesquelles repose la rondelle inférieure.

Suivant un mode de réalisation la rondelle inférieure a un diamètre inférieur à un diamètre intérieur de la zone annulaire périphérique d'appui de l'extrémité supérieure du ressort à boudin.

Suivant un mode de réalisation, la face inférieure de la coupelle monobloc comporte en outre une zone de logement d'une extrémité supérieure d'un tampon de choc, délimitée par un épaulement annulaire plan intérieur et par une face de confinement au moins partiellement cylindrique tournée radialement vers l'intérieur, la face de confinement étant située radialement à l'intérieur de la portée annulaire. De préférence, la zone de contact est située radialement à l'intérieur de la face de confinement. Suivant un mode de réalisation particulièrement avantageux la coupelle monobloc présente une cloison formant un pli annulaire constituant la face de confinement et la portée annulaire.

Préférentiellement, la coupelle monobloc présente des orifices d'évacuation pour évacuer l'eau qui pourrait s'accumuler sur la face supérieure.

Suivant un mode de réalisation, le palier est un palier à roulement, comportant des corps roulants en contact avec des chemins de roulement formés sur les rondelles supérieure et inférieure. Alternativement, le palier peut être un palier lisse, avec ou sans interposition d'une rondelle de friction entre la rondelle supérieure et la rondelle inférieure.

Suivant un autre aspect de l'invention, celle-ci a trait à une jambe de suspension comportant une butée de suspension telle que décrite précédemment, un amortisseur télescopique, de préférence en appui contre la butée, et un ressort à boudin entourant l'amortisseur télescopique et présentant une extrémité supérieure en appui contre la zone d'appui. De préférence, la jambe comporte en outre un tampon de choc servant de butée de fin de course d'amortissement de l'amortisseur et présentant une extrémité supérieure logée une zone de logement de la coupelle.

### BRÈVE DESCRIPTION DES FIGURES

D'autres caractéristiques et avantages de l'invention ressortiront à la lecture de la description qui suit, en référence aux figures annexées, qui illustrent :
- la figure 1, une vue en coupe d'une jambe de suspension et d'une butée de suspension suivant un premier mode de réalisation de l'invention;
- la figure 2, une vue en perspective d'une coupelle de la butée de la figure 1;
- la figure 3, une vue en perspective d'une coupelle suivant une variante de réalisation;
- la figure 4, une vue en coupe d'une butée de suspension suivant un autre mode de réalisation de l'invention;
- la figure 5, une vue en perspective et partiellement en coupe d'une butée de suspension selon un autre mode de réalisation de l'invention;
- la figure 6, une vue en coupe de la butée de suspension de la figure 5;
- la figure 7, une vue en coupe d'une butée de suspension suivant une variante de réalisation;
- la figure 8, une vue en coupe d'une butée de suspension suivant une autre variante de réalisation.

Pour plus de clarté, les éléments identiques sont repérés par des signes de référence identiques sur l'ensemble des figures.

### DESCRIPTION DÉTAILLÉE DE MODES DE RÉALISATION

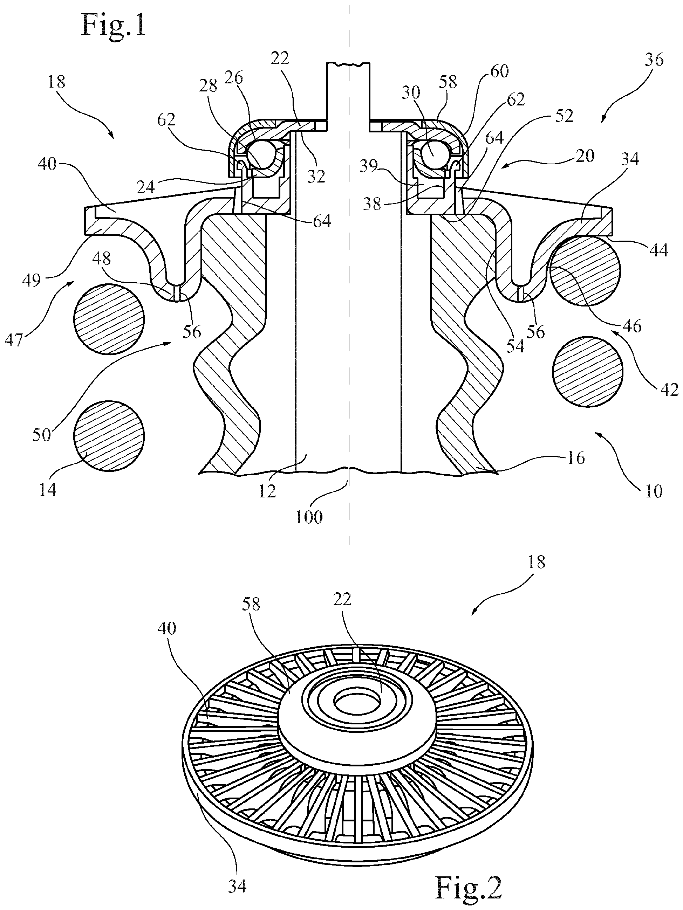

En référence aux figures **1** et **2****,** une jambe de suspension **10** est composée, dans sa partie supérieure, d'un amortisseur télescopique **12,** d'un ressort à boudin **14,** d'un tampon de choc **16** et d'une butée de suspension tournante **18** assurant l'interface entre les éléments précédents et la caisse du véhicule (non représentée).

La rotation de la butée **18** autour d'un axe **100** est assurée par un roulement **20** comportant une rondelle supérieure métallique **22** et une rondelle inférieure métallique **24,** de préférence réalisées par emboutissage d'une tôle, et définissant des chemins de roulement **26, 28** sur lesquels roulent des corps roulants **30,** en l'espèce des billes. La rondelle supérieure **22** forme une portée annulaire plane d'appui **32** pour l'amortisseur télescopique **12,** s'étendant radialement vers l'intérieur par rapport aux chemins de roulement **26, 28.**

L'interface entre d'une part le roulement **20** et d'autre part l'amortisseur télescopique **12,** le ressort à boudin **14** et le tampon de choc **16** est assuré par une coupelle d'appui monobloc **34** en matière plastique.

Cette coupelle présente sur sa face supérieure **36** une zone de contact **38** avec la rondelle inférieure **24** du roulement **20,** composée de nervures **39,** la rondelle inférieure **24** étant en appui sur les arêtes des nervures **39.** Les nervures **39** peuvent être radiales comme illustré sur la figure **1****,** ou circulaires et concentriques. La face supérieure **36** de la coupelle **34** comporte en outre des nervures de renfort **40** situées radialement à l'extérieur de la zone de contact **38,** s'étendant depuis cette dernière jusqu'à la périphérie extérieure de la coupelle **34.**

La face inférieure **42** de la coupelle **34** présente à sa périphérie un épaulement annulaire plan extérieur **44** et une portée annulaire au moins partiellement cylindrique **46** tournée radialement vers l'extérieur délimitant avec l'épaulement extérieur **44** une zone annulaire périphérique d'appui **47** pour l'extrémité supérieure du ressort à boudin.

La coupelle **34** présente une cloison **49** formant un pli annulaire **48** formant la portée annulaire **46** et entourant extérieurement une zone de logement **50** d'une extrémité supérieure du tampon de choc **16** formée par un épaulement annulaire plan **52** et par une face de confinement **54** au moins partiellement cylindrique tournée radialement vers l'intérieur. La face de confinement **54** de la zone de logement **50** de l'extrémité supérieure du tampon de choc **16** est située radialement à l'intérieur de la portée annulaire **46** de la zone d'appui de l'extrémité supérieure du ressort **14.** La rondelle inférieure **24** a un diamètre inférieur au diamètre de la portée cylindrique **46** et de préférence inférieur au diamètre de la face de confinement **54.** Des orifices d'évacuation **56** situés radialement à l'extérieur de la zone de contact **38** avec la rondelle inférieure, de préférence à la périphérie immédiate de cette zone, permettent le cas échéant une évacuation de liquide.

Un couvercle de protection **58** du roulement **20** vient en appui sur la rondelle supérieure **22** et présente une jupe périphérique **60** formant avec des crochets **62** formés sur la face supérieure **36** de la coupelle **34** un joint labyrinthe. La jupe périphérique **60** et les crochets **62** présentent des zones d'encliquetage mutuel qui ne sont pas en prise après le montage de la butée sur le véhicule, mais permettent de constituer un sous-ensemble cohérent préassemblé entre le roulement **20** et la coupelle **34** avant le montage sur le véhicule.

De manière remarquable, la coupelle **34** présente une lumière périphérique axiale **64** en face de chacun des crochets, de sorte qu'aucune partie de la coupelle **34** ne se trouve en recouvrement axial avec les crochets **62.** Cette disposition permet une réalisation de la pièce **34** par moulage par injection dans un moule à mouvement purement axial, parallèlement à l'axe de rotation **100** du roulement **20.**

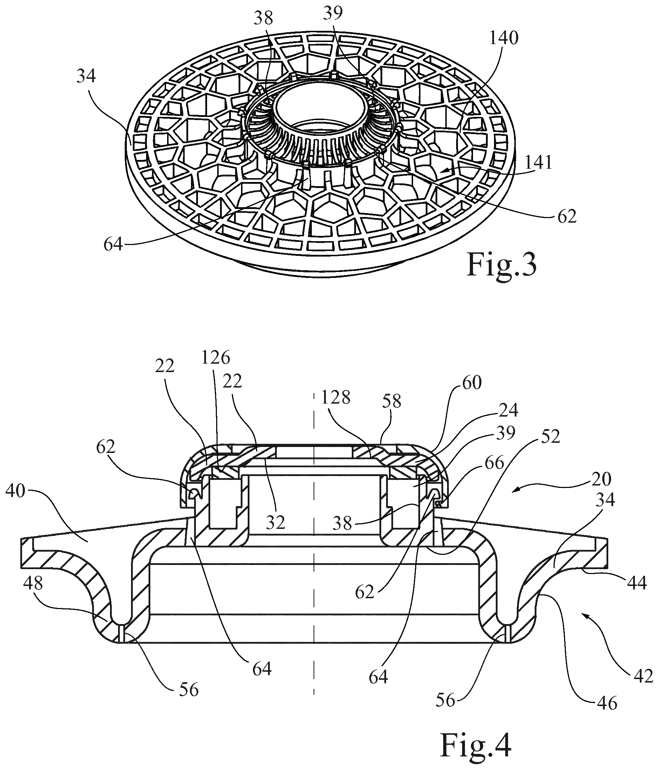

La coupelle **34** illustrée sur la figure **3** présente sur sa face supérieure des nervures **140** délimitant des alvéoles polygonales **141.** La zone de contact **38** est identique à celle de la coupelle **34** de la figure **1****.** En particulier, on y retrouve les crochets **62** situés axialement dans le prolongement des lumières axiales **64,** qui permettent un moulage dans un moule en deux pièces en mouvement relatif de translation axiale.

Suivant un autre mode de réalisation, illustré sur la figure **4****, le** palier **20** est un palier lisse, la rondelle supérieure **22** et la rondelle inférieure **24** présentant des pistes de friction annulaires **126, 128** au contact l'une de l'autre. On peut également envisager un palier lisse avec interposition d'une rondelle de friction entre la rondelle supérieure **22** et la rondelle inférieure **24.** On distingue sur cette figure les crochets **62** s'étendant radialement vers le couvercle **60** dans le prolongement des lumières axiales **64,** et venant coopérer avec une zone d'encliquetage constituée par des crochets **66** réalisés sur le couvercle pour réaliser un encliquetage élastique entre couvercle **58** et coupelle **34,** donnant au sous-ensemble sa cohérence avant assemblage sur le véhicule.

D'autres variantes sont naturellement possibles. Il est notamment possible de prévoir un insert, notamment un insert métallique, de renfort de la coupelle. On peut prévoir des nervures radiales se croisant avec des nervures en arc de cercle.

Les modes de réalisation précédents, qui permettent un moulage axial de la coupelle, présentent l'inconvénient de rendre difficile voire impossible un moulage axial du couvercle, notamment du fait des contre-dépouilles au niveau des reliefs périphériques d'encliquetages **66.** Le cas échéant, on peut faire en sorte que ces contre-dépouilles au niveau des reliefs périphériques aient une faible épaisseur, compatible avec un démoulage axial en force.

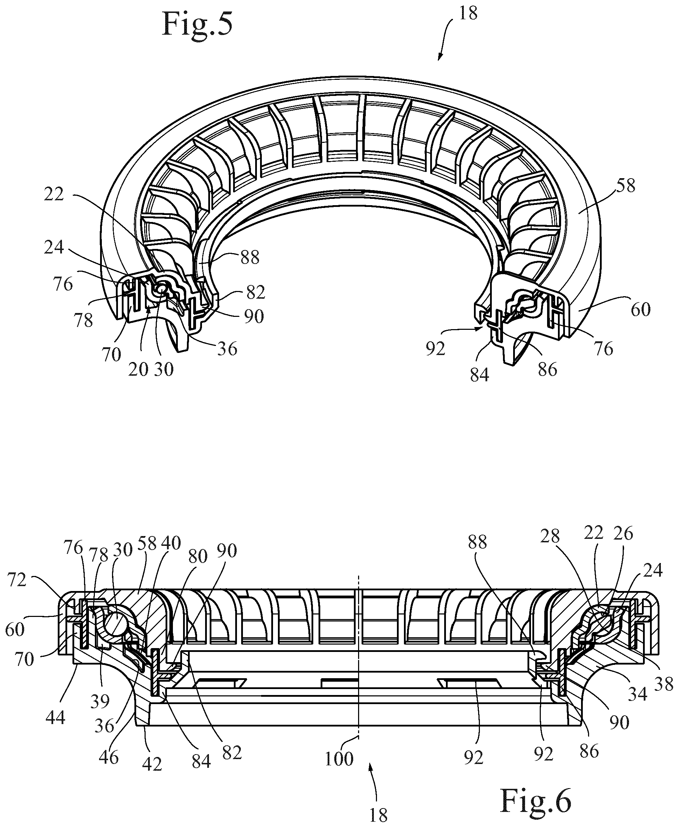

Le mode de réalisation des figures **5** et **6** vient répondre à ce souci de proposer une butée de suspension dont la coupelle et le couvercle sont tous deux réalisables par moulage axial, et néanmoins encliquetables l'un dans l'autre afin de réaliser une unité structurelle avant le montage sur le véhicule.

La rotation de la butée **18** autour d'un axe **100** est assurée par un roulement **20** comportant une rondelle supérieure métallique **22** et une rondelle inférieure métallique **24,** de préférence réalisées par emboutissage d'une tôle, et définissant des chemins de roulement **26, 28** sur lesquels roulent des corps roulants **30,** en l'espèce des billes.

L'interface entre le roulement **20** et le ressort à boudin de la jambe de suspension est assurée par une coupelle d'appui monobloc **34** en matière plastique. Cette coupelle présente sur sa face supérieure **36** une zone de contact **38** avec la rondelle inférieure **24** du roulement **20,** composée de nervures **39,** la rondelle inférieure **24** étant en appui sur les arêtes des nervures **39.** Les nervures **39** peuvent être radiales comme illustré sur les figures **5** et **6****,** ou circulaires et concentriques. La face supérieure **36** de la coupelle **34** comporte en outre des nervures de renfort **40** situées radialement à l'intérieur de la zone de contact **38.**

La face inférieure **42** de la coupelle **34** présente à sa périphérie un épaulement annulaire plan extérieur **44** et une portée annulaire au moins partiellement cylindrique **46** tournée radialement vers l'extérieur délimitant avec l'épaulement extérieur **44** une zone annulaire périphérique d'appui **47** pour l'extrémité supérieure du ressort à boudin. La rondelle inférieure **24** a un diamètre intérieur sensiblement égal ou supérieur au diamètre de la portée cylindrique **46.**

Un couvercle de protection **58** du roulement **20** vient en appui sur la rondelle supérieure **22** et présente une jupe périphérique extérieure **60** venant en regard et à faible distance d'une paroi cylindrique **70** extérieure de la coupelle **34,** pour créer une première perte de charge protégeant le roulement **20** des pénétrations de liquides. Le couvercle de protection **58** comporte une deuxième jupe extérieure **72,** située radialement à l'intérieur de la jupe périphérique **60,** et venant axialement en regard et à distance de la paroi cylindrique **70,** pour former une deuxième perte de charge protégeant le roulement. Un joint annulaire **74** à section en forme de T couché est inséré de manière à s'étendre dans l'espace entre la paroi cylindrique **70** et la jupe de confinement **72,** et à se loger partiellement dans un logement **76** délimité par la paroi cylindrique extérieure **70** et une deuxième paroi cylindrique **78** de la coupelle, située radialement à l'intérieur de la paroi **70.**

Le couvercle **58** comporte en outre au moins une jupe cylindrique intérieure de protection **80,** située radialement à l'intérieur du palier **20,** et la coupelle **34** comporte au moins une paroi cylindrique intérieure de protection **82,** située radialement à l'intérieur, en regard et à distance de la jupe cylindrique intérieure de protection **80,** pour créer une perte de charge. La coupelle comporte en outre une paroi cylindrique intérieure de confinement **84,** située axialement en regard et à distance de la jupe cylindrique intérieure de protection **80** du couvercle pour créer une deuxième perte de charge. La coupelle **37** et le couvercle **58** délimitent un logement annulaire intérieur entre la paroi cylindrique intérieure de protection **82** de la coupelle et le palier **20,** logement dans lequel est logé un joint annulaire intérieur **86** à section en T couché.

La paroi cylindrique intérieure de protection **82** est pourvue de crochets 88 faisant saillie radialement vers le couvercle **58,** donc vers l'extérieur, et venant s'encliqueter élastiquement dans une zone d'encliquetage annulaire **90** formée à l'extrémité de la jupe cylindrique intérieure de protection **80** du couvercle et faisant saillie radialement vers l'intérieur. Les crochets **88** sont répartis sur toute la circonférence de la paroi cylindrique intérieure de protection **82** et assurent avec la zone d'encliquetage annulaire **90** une cohérence de la butée avant son montage sur le véhicule.

De manière remarquable, chacun des crochets **88** est situé dans le prolongement axial d'une lumière **92** formée dans la coupelle **34,** de façon à ce qu'aucune partie de la coupelle **34** ne vienne en recouvrement radial avec les crochets **88.** Cette disposition des lumières **92** permet de mouler la coupelle dans un moule en deux pièces mobiles l'une par rapport à l'autre en translation axiale suivant l'axe **100.** On constate en outre que le couvercle **58** peut également être moulé dans un moule en deux pièces mobiles l'une par rapport à l'autre en translation axiale suivant l'axe **100,** puisqu'aucune partie du couvercle **58** ne vient en recouvrement radial avec une autre, et singulièrement avec la zone d'accrochage annulaire **90.**

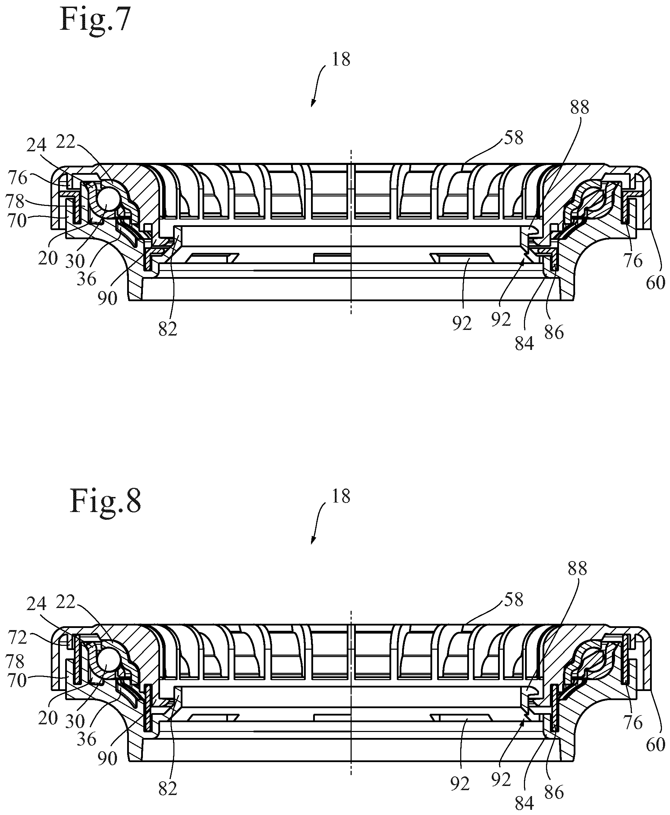

Sur la figure **7** est illustrée une variante de réalisation qui ne diffère du mode de réalisation des figures **5** et **6** que par la forme des joints annulaires d'étanchéité **76** et **86,** qui ont une section en L. Sur la figure **8** est illustrée une autre variante de réalisation qui ne diffère du mode de réalisation des figures **5** et **6** que par la forme des joints annulaires d'étanchéité **76** et **86,** qui sont cylindriques. D'autres formes de joints sont également envisageables, notamment à profil en H. Naturellement, il est possible de créer d'autres variantes en combinant un joint **86** d'une forme donnée du côté radial intérieur et un joint **76** d'une autre forme du côté radial extérieur.

## Revendications

1. Butée de suspension (18), pour une jambe de suspension (10) comportant un amortisseur télescopique (12) et un ressort à boudin (14), la butée de suspension (18) définissant un axe géométrique de référence (100) et comportant:
- un palier (20) comportant au moins une rondelle supérieure (22) et une rondelle inférieure (24) tournant l'une par rapport à l'autre;
- un couvercle monobloc en matière plastique moulée (58), présentant une face inférieure comportant une zone de contact avec la rondelle supérieure, le couvercle présentant au moins une zone d'encliquetage (66, 90);
- une coupelle monobloc inférieure en matière plastique moulée (34) présentant une face supérieure (36) comportant une zone de contact (38) avec la rondelle inférieure (24) et une face inférieure (42) comportant une zone annulaire périphérique d'appui (47) pour l'extrémité supérieure du ressort à boudin (14);
**caractérisée en ce que** la coupelle (34) comporte des crochets (62, 88) faisant saillie radialement vers la zone d'encliquetage (66, 90) du couvercle, de sorte à venir s'encliqueter sur la zone d'encliquetage (66, 90) du couvercle, la coupelle (34) présentant des lumières (64, 92) en alignement axial avec les crochets (62, 88) de manière à ce que la coupelle (34) ne comporte aucune partie en recouvrement radial avec les crochets (62, 88).

2. Butée de suspension selon la revendication 1, **caractérisée en ce que** le couvercle (58) est conformé de manière à ne comporter aucune partie en recouvrement radial avec les zones d'encliquetage (90).

3. Butée de suspension selon l'une quelconque des revendications précédentes, **caractérisée en ce que** le couvercle (58) comporte au moins une jupe cylindrique extérieure de protection (60), située radialement à l'extérieur du palier (20), et la coupelle (34) comporte au moins une paroi cylindrique extérieure de protection (70), située radialement entre le palier (20) et la jupe cylindrique extérieure de protection (60), en regard et à distance de la jupe cylindrique extérieure de protection (60), pour créer une perte de charge.

4. Butée de suspension selon la revendication 3, **caractérisée en ce que** le couvercle (58) comporte au moins une jupe cylindrique extérieure de confinement (72), située axialement en regard et à distance de la paroi cylindrique extérieure de protection (70) de la coupelle.

5. Butée de suspension selon l'une quelconque des revendications 3 ou 4, **caractérisée en ce que** la coupelle (34) et le couvercle (58) délimitent un logement annulaire situé radialement entre le palier (20) et la jupe cylindrique extérieure (60) du couvercle, la butée (18) comportant en outre un joint extérieur (76) logé au moins partiellement dans le logement annulaire.

6. Butée de suspension selon la revendication 5, **caractérisée en ce que** le joint extérieur (76) est cylindrique.

7. Butée de suspension selon la revendication 4, en combinaison avec la revendication 5, **caractérisée en ce que** le joint extérieur (76) comporte une partie annulaire s'étendant radialement entre la jupe cylindrique extérieure de confinement (72) du couvercle et la paroi cylindrique extérieure de protection (70) de la coupelle.

8. Butée de suspension selon l'une quelconque des revendications 5, ou 7, **caractérisé en ce que** le joint extérieur (76) présente une section conformée en L, en T couché ou en H.

9. Butée de suspension selon l'une quelconque des revendications précédentes, **caractérisée en ce que** le couvercle (58) comporte au moins une jupe cylindrique intérieure de protection (80), située radialement à l'intérieur du palier (20), et la coupelle (34) comporte au moins une paroi cylindrique intérieure de protection (82), située radialement à l'intérieur de la jupe cylindrique intérieure de protection (80) du couvercle, en regard et à distance de la jupe cylindrique intérieure de protection (80) du couvercle, pour créer une perte de charge.

10. Butée de suspension selon la revendication 9, **caractérisée en ce que** la coupelle et le couvercle délimitent un logement annulaire intérieur entre la paroi cylindrique intérieure de protection de la coupelle et le palier, un joint intérieur étant logé dans le logement annulaire intérieur.

11. Butée de suspension selon la revendication 10, **caractérisée en ce que** le joint intérieur est cylindrique.

12. Butée de suspension selon la revendication 10, **caractérisée en ce que** le joint intérieur comporte une partie annulaire s'étendant radialement entre la zone d'encliquetage (90) et la coupelle (34).

13. Butée de suspension selon l'une quelconque des revendications 10 ou 12, **caractérisé en ce que** le joint intérieur présente une section conformée en L, en T couché.

14. Butée selon l'une quelconque des revendications précédentes, **caractérisée en ce que** la face supérieure (36) de la coupelle monobloc (34) comporte des nervures de renfort (40, 140) situées radialement à l'extérieur de la zone de contact.

15. Butée selon l'une quelconque des revendications précédentes, **caractérisée en ce que** les crochets (62, 88) font saillie radialement vers l'extérieur et la zone d'encliquetage (66, 90) fait saillie radialement vers l'intérieur.

16. Butée selon l'une quelconque des revendications 1 à 14, **caractérisée en ce que** les crochets (62, 88) font saillie radialement vers l'intérieur et la zone d'encliquetage (66, 90) fait saillie radialement vers l'extérieur.

## Patentansprüche

1. Federpuffer (18) für ein Federbein (10), das einen teleskopischen Stoßdämpfer (12) und eine Schraubenfeder (14) enthält, wobei der Federpuffer (18) eine geometrische Bezugsachse (100) abgrenzt und folgendes enthält:
- ein Lager (20) mit mindestens eine obere Schreibe (22) und einer unteren Schreibe (24), die sich umeinander drehen;
- ein Monoblockdeckel aus Formkunststoff (58), welcher eine untere Seite mit einem Kontaktbereich zur oberen Scheibe aufweist, wobei der Deckel mindestens einen Rastbereich (66,90) enthält;
- eine untere Monoblockschale aus Formkunststoff (34), die eine obere Seite (36) mit einem Kontaktbereich (38) zur unteren Scheibe (24) und eine untere Seite (42) mit einem ringförmigen peripheren Auflagebereich (47) für das obere Ende der Schraubenfeder aufweist;
**dadurch gekennzeichnet, dass** die Schale (34) Haken (62, 88) aufweist, die radial zum Rastbereich (66, 90) des Deckels hin vorstehen, so dass sie in den Rastbereich (66, 90) des Deckels einrasten, wobei die Schale (34) durch die axiale Ausrichtung mit den Haken (62, 88) Öffnungen (64, 92) aufweist, so dass kein Teil der Schale (34) die Haken (62,88) radial bedeckt.

2. Federpuffer nach Anspruch 1, **dadurch gekennzeichnet, dass** der Deckel (58) so gestaltet ist, dass er mit keinem Teil die Rastbereiche (90) radial bedeckt.

3. Federpuffer nach einem der vorhergehenden Ansprüche, **dadurch gekennzeichnet, dass** der Deckel (58) mindestens einen äußeren zylindrischen Schutzkragen (60) enthält, der sich radial außen am Lager (20) befindet, und die Schale (34) mindestens eine äußere zylindrische Schutzwand (70) enthält, die sich radial zwischen dem Lager (22) und dem äußeren zylindrischen Schutzkragen (60) gegenüber dem äußeren zylindrischen Schutzkragen (60) in einem Abstand zu demselben befindet, um einen Lastverlust zu erzeugen.

4. Federbein nach Anspruch 3, **dadurch gekennzeichnet, dass** der Deckel (58) mindestens einen äußeren zylindrischen Einschlusskragen (72) aufweist, der sich axial gegenüber der äußeren zylindrischen Schutzwand (70) der Schale und im Abstand zu ihr befindet.

5. Federbein nach einem der Ansprüche 3 oder 4, **dadurch gekennzeichnet, dass** die Schale (34) und der Deckel (58) eine ringförmige Aufnahme abgrenzen, die sich radial zwischen dem Lager (20) und dem äußeren zylindrischen Kragen (60) des Deckels befindet, wobei der Puffer (18) des Weiteren eine Außendichtung (76) aufweist, die mindestens teilweise in der ringförmigen Aufnahme liegt.

6. Federbein nach Anspruch 5, **dadurch gekennzeichnet, dass** die Außendichtung (76) zylindrisch ist.

7. Federbein nach Anspruch 4 in Kombination mit Anspruch 5, **dadurch gekennzeichnet, dass** die Außendichtung (76) einen ringförmigen Teil enthält, der sich radial zwischen dem äußeren zylindrischen Einschlusskragen (72) des Deckels und der äußeren zylindrischen Schutzwand (70) der Schale befindet.

8. Federpuffer nach einem der Ansprüche 5 oder 7, **dadurch gekennzeichnet, dass** die Außendichtung (76) einen Abschnitt aufweist, der in Form eines L, eines liegenden T oder eines H gestaltet ist.

9. Federpuffer nach einem der vorhergehenden Ansprüche, **dadurch gekennzeichnet, dass** der Deckel (58) mindestens einen inneren zylindrischen Schutzkragen (80) aufweist, der sich radial im Innern des Lagers (20) befindet, und die Schale (34) mindestens eine innere zylindrische Schutzwand (82) enthält, die sich radial im Innern des inneren zylindrischen Schutzkragens (80) des Deckels gegenüber des inneren zylindrischen Schutzkragens (80) des Deckels und im Abstand dazu befindet, um einen Lastverlust zu erzeugen.

10. Federpuffer nach Anspruch 9, **dadurch gekennzeichnet, dass** die Schale und der Deckel eine ringförmige innere Aufnahme zwischen der inneren zylindrischen Schutzwand der Schale und dem Lager abgrenzen, wobei in der inneren ringförmigen Aufnahme eine Innendichtung gelagert ist.

11. Federpuffer nach Anspruch 10, **dadurch gekennzeichnet, dass** die innere Dichtung zylindrisch ist.

12. Federpuffer nach Anspruch 10, **dadurch gekennzeichnet, dass** die innere Dichtung einen ringförmigen Teil enthält, der sich radial zwischen dem Rastbereich (90) und der Schale (34) erstreckt.

13. Federpuffer nach einem der Ansprüche 10 oder 12, **dadurch gekennzeichnet, dass** die innere Dichtung einen Abschnitt in Form eines L oder eines liegenden T aufweist.

14. Puffer nach einem der vorhergehenden Ansprüche, **dadurch gekennzeichnet, dass** die obere Seite (36) der Monoblockschale (34) Verstärkungsrippen (40, 140) aufweist, die sich radial außen am Rastbereich befinden.

15. Puffer nach einem der vorhergehenden Ansprüche, **dadurch gekennzeichnet, dass** die Haken (62, 88) radial nach außen vorspringen und der Rastbereich (66, 90) radial nach innen vorsteht.

16. Puffer nach einem der Ansprüche 1 bis 14, **dadurch gekennzeichnet, dass** die Haken (62, 88) radial nach innen vorstehen und der Rastbereich (66, 90) radial nach außen vorspringt.

## Claims

1. A bump stop (18) for a MacPherson strut (10) comprising a telescopic shock-absorber (12) and a coil spring (14), with the bump stop (18) defining a reference geometrical axis (100) and comprising:
- a bearing (20) comprising at least one upper washer (22) and one lower washer (24) rotating relative to each other;
- a single-piece cover (58) made of moulded plastic material, having a lower face including an area of contact with the upper washer, with the cover having at least one snap-fitting area (66, 90);
- a lower single-piece cup (34) made of moulded plastic material having an upper face (36) comprising an area (38) of contact with the lower washer (24) and a lower face (42) comprising a peripheral annular area (47) for supporting the upper end of the coil spring (14) ;
**characterized in that** the cup (34) comprises hooks (62, 88) which radially protrude towards the cover snap-fitting area (66, 90), so as to snap-fit on the snap-fitting area (66, 90) of the cover, with the cup (34) having holes (64, 92) axially aligned with the hooks (62, 88) so that the cup (34) comprises no portion radially overlapping the hooks (62, 88).

2. A bump stop according to claim 1, **characterized in that** the cover (58) is so formed as to have no portion radially overlapping the snap-fitting areas (90).

3. A bump stop according to any one of the preceding claims, **characterized in that** the cover (58) includes at least one outer cylindrical protective skirt (60) positioned radially outside the bearing (20), and the cup (34) includes at least one outer cylindrical protective wall (70), positioned radially between the bearing (20) and the outer cylindrical protective skirt (60), opposite and at a distance from the outer cylindrical protective skirt (60), so as to create a head loss.

4. A bump stop according to claim 3, **characterized in that** the cover (58) includes at least one outer cylindrical containment skirt (72) positioned axially opposite and at a distance from the outer cylindrical protective wall (70) of the cup.

5. A bump stop according to any one of claims 3 or 4, **characterized in that** the cup (34) and the cover (58) define an annular recess located radially between the bearing (20) and the outer cylindrical skirt (60) of the cover, with the stop (18) further including an outer seal (76) at least partially accommodated in the annular recess.

6. A bump stop according to claim 5, **characterized in that** the outer seal (76) is cylindrical.

7. A bump stop according to claim 4 in combination with claim 5, **characterized in that** the outer seal (76) includes an annular portion which radially extends between the outer cylindrical containment skirt (72) of the cover and the outer cylindrical protective wall (70) of the cup.

8. A bump stop according to any one of claims 5 or 7, **characterized in that** the outer seal (76) has a section with the shape of a L, a horizontal T or a H.

9. A bump stop according to any one of the preceding claims, **characterized in that** the cover (58) includes at least one inner cylindrical protective skirt (80), positioned radially inside the bearing (20), and the cup (34) includes at least one inner cylindrical protective wall (82), positioned radially inside the inner cylindrical protective skirt (80) of the cover, opposite and at a distance from the inner cylindrical protective skirt (80) of the cover, to create a head loss.

10. A bump stop according to claim 9, **characterized in that** the cup and the cover define an inner annular recess between the inner cylindrical protective wall of the cup and the bearing, with an inner seal being accommodated in the inner annular recess.

11. A bump stop according to claim 10, **characterized in that** the inner seal is cylindrical.

12. A bump stop according to claim 10, **characterized in that** the inner seal includes an annular portion which radially extends between the snap-fitting area (90) and the cup (34).

13. A bump stop according to any one of claims 10 or 12, **characterized in that** the inner seal has a section with the shape of a L, or a horizontal T.

14. A bump stop according to any one of the preceding claims, **characterized in that** the upper face (36) of the single-piece cup (34) includes reinforcing ribs (40, 140) positioned radially outside the contact area.

15. A bump stop according to any one of the preceding claims, **characterized in that** the hooks (62, 88) protrude radially outwards and the snap-fitting area (66, 90) radially protrudes inwards.

16. A bump stop according to any one of claims 1 to 14, **characterized in that** the hooks (62, 88) radially protrude inwards and the snap-fitting area (66, 90) radially protrudes outwards.
